(19) Europäisches Patentamt
European Patent Office
Office européen des brevets

(11) EP 4 349 589 A1

(12) **EUROPEAN PATENT APPLICATION**
published in accordance with Art. 153(4) EPC

(43) Date of publication:
**10.04.2024 Bulletin 2024/15**

(21) Application number: **22816086.7**

(22) Date of filing: **31.05.2022**

(51) International Patent Classification (IPC):
***B32B 7/023*** *(2019.01)* ***B32B 27/30*** *(2006.01)*
***C08F 290/06*** *(2006.01)*

(52) Cooperative Patent Classification (CPC):
**B32B 7/023; B32B 27/30;** C08F 290/06

(86) International application number:
**PCT/JP2022/022066**

(87) International publication number:
**WO 2022/255340 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.06.2021 JP 2021093859**

(71) Applicant: **MITSUBISHI GAS CHEMICAL COMPANY, INC.**
**Chiyoda-ku**
**Tokyo 100-8324 (JP)**

(72) Inventor: **KAKEYA, Fumiaki**
**Tokyo 125-8601 (JP)**

(74) Representative: **Hoffmann Eitle**
**Patent- und Rechtsanwälte PartmbB**
**Arabellastraße 30**
**81925 München (DE)**

# (54) ANTIREFLECTION FILM, LAMINATE HAVING ANTIREFLECTION FILM, AND METHOD FOR MANUFACTURING ANTIREFLECTION FILM

(57) One embodiment provides an anti-reflection film or the like that is a layered product having low surface reflectivity, excellent thermoformability, and, in particular, satisfactory abrasion resistance.

The anti-reflection film comprises:
a base material layer including a thermoplastic resin; and
a low-refractive-index layer that is arranged on at least one surface of the base material layer and that has a refractive index lower than the refractive index of the base material layer, wherein
the low-refractive-index layer includes a polymer of a resin material including:
a urethane (meth)acrylate derived from
(a1) an aromatic diisocyanate compound and
(a2) one or more (meth)acryloyl compounds having a hydroxyl group and a (meth)acryloyl group per molecule; and

a (meth)acrylate.

[Figure 3]

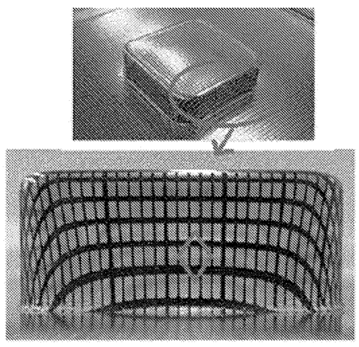

EP 4 349 589 A1

## Description

TECHNICAL FIELD

The present invention relates to an anti-reflection film including a base material layer and a low-refractive-index layer having a refractive index lower than that of the base material layer, a layered product having the anti-reflection film, and the others.

BACKGROUND ART

A layered film having a surface having low reflectivity which can be used as an anti-reflection film is conventionally known (see Patent Literature 1). Layered films having low surface reflectivity are used for applications including a computer screen, a television screen, a plasma display panel, a surface of a polarizing plate to be used for a liquid crystal display, a sunglass lens, a prescription glass lens, a finder lens for a camera, a cover for various instruments, glass of automobiles, glass of trains, a display panel for a vehicle, an electronic equipment casing, etc.

Citation List

Patent Literature

Patent Literature 1: Japanese Laid-Open Patent Publication No. 2014-41244

SUMMARY

TECHNICAL PROBLEM

Many layered films conventionally used as anti-reflection films for the above-described applications do not have sufficient thermoformability and do not necessarily have satisfactory abrasion resistance.

The problem to be solved by the present invention is to provide an anti-reflection film that has low surface reflectivity, excellent thermoformability, and, especially, satisfactory abrasion resistance, a layered product having the anti-reflection film, and the others.

SOLUTION TO PROBLEM

The present inventors diligently made researches in order to solve the above-described problems and found that an anti-reflection film having a base material layer including a thermoplastic resin and a low-refractive-index layer, wherein the low-refractive-index layer includes a polymer of a predetermined resin material, has excellent thermoformability and abrasion resistance, and thus the present invention was achieved.

Specifically, the present invention includes the following.

(1) An anti-reflection film comprising:

a base material layer including a thermoplastic resin; and
a low-refractive-index layer that is arranged on at least one surface of the base material layer and that has a refractive index lower than the refractive index of the base material layer, wherein
the low-refractive-index layer includes a polymer of a resin material including:

a urethane (meth)acrylate derived from

(a1) an aromatic diisocyanate compound and
(a2) one or more (meth)acryloyl compounds having a hydroxyl group and a (meth)acryloyl group per molecule, and

a (meth)acrylate.

(2) The anti-reflection film according to (1), wherein the resin material comprises a mixture of urethane (meth)acrylates each having two to six (meth)acryloyl groups per molecule.
(3) The anti-reflection film according to (1), wherein the urethane (meth)acrylate includes a reaction product between

the aromatic diisocyanate compound (a1), and

the (meth)acryloyl compound (a2), wherein the (meth)acryloyl compound is any one or more selected from the group consisting of pentaerythritol tri(meth)acrylate, 2-hydroxyethyl (meth)acrylate, 2-hydroxypropyl (meth)acrylate, 2-hydroxybutyl (meth)acrylate, 4-hydroxybutyl (meth)acrylate, caprolactone (meth)acrylate, and 2-hydroxy-3-phenoxypropyl (meth)acrylate.

(4) The anti-reflection film according to (1), wherein the (meth)acryloyl compound (a2) includes

(a2-1) a compound having one (meth)acryloyl group per molecule, and

(a2-2) a compound having three (meth)acryloyl groups per molecule in a molar ratio (a2-1)/(a2-2) of 80/20 to 0/100.

(5) The anti-reflection film according to (1), wherein the (meth)acryloyl compound (a2) includes at least one selected from pentaerythritol tri(meth)acrylate, 2-hydroxyethyl (meth)acrylate, 2-hydroxypropyl (meth)acrylate, 2-hydroxybutyl (meth)acrylate, 4-hydroxybutyl (meth)acrylate, caprolactone (meth)acrylate, and 2-hydroxy-3-phenoxypropyl (meth)acrylate.

(6) The anti-reflection film according to item (1), wherein the (meth)acrylate is a substituted or unsubstituted compound having 4 to 20 carbon atoms including at least one (meth)acryloyl group and at least one vinyl ether group.

(7) The anti-reflection film according to item (1), wherein the low-refractive-index layer further includes a low-refractive-index member.

(8) The anti-reflection film according to (7), wherein the low-refractive-index member includes a hollow silica.

(9) The anti-reflection film according to claim (7) or (8), wherein the low-refractive-index layer includes the resin material and the low-refractive-index member in a weight ratio of 20:80 to 70:30.

(10) The anti-reflection film according to item (1), wherein the low-refractive-index layer further includes at least one of a photoinitiator and a fluorine-based leveling agent.

(11) The anti-reflection film according to (1), wherein the resin material includes the urethane acrylate and the (meth)acrylate in a weight ratio of 95:5 to 70:30.

(12) The anti-reflection film according to item (1), which includes two or more of the base material layers.

(13) The anti-reflection film according to item (1), wherein the base material layer has a thickness of 50 to 500 μm and the low-refractive-index layer has a thickness of 10 to 200 nm.

(14) The anti-reflection film according to item (1), which further has a hard coat layer that is arranged between the base material layer and the low-refractive-index layer.

(15) The anti-reflection film according to item (14), wherein the base material layer has a refractive index of 1.49 to 1.65, and wherein the difference between the refractive index of the base material layer and the refractive index of the hard coat layer is 0.04 or less.

(16) The anti-reflection film according to item (1), which further has a high-refractive-index layer that has a refractive index higher than the refractive index of the base material layer.

(17) The anti-reflection film according to item (16), wherein the base material layer has a refractive index of 1.49 to 1.65, the low-refractive-index layer has a refractive index of 1.31 to 1.40 and the high-refractive-index layer has a refractive index of 1.68 to 1.75.

(18) The anti-reflection film according to (16), wherein the high-refractive-index layer is arranged between the base material layer and the low-refractive-index layer.

(19) The anti-reflection film according to (16), which further has a hard coat layer that is arranged between the base material layer and the high-refractive-index layer.

(20) The anti-reflection film according to item (16), which further has a hard coat layer, wherein:

the base material layer has a thickness of 50 to 500 μm; the hard coat layer has a thickness of 1 to 10 μm; the high-refractive-index layer has a thickness of 10 to 200 nm; and the low-refractive-index layer has a thickness of 10 to 200 nm.

(21) The anti-reflection film according to item (16), wherein the high-refractive-index layer includes a polymer of a resin material including a urethane (meth)acrylate derived from a fluorene-based diol, an isocyanate and a (meth)acrylate and a (meth)acrylate.

(22) The anti-reflection film according to any one of items (1) to (21), wherein regarding a sample of the anti-reflection film obtained by being cut into a size of 210 mm×297 mm×0.3 mm (thickness), when the base material layer is preheated at 190°C for 40 seconds, the sample is placed in a mold including a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, the radius R of an area in which a pressure formed body obtained is in contact with the right angle-shaped portion of the mold is 3.0 mm or less.

(23) An anti-reflection film comprising:

a base material layer including a thermoplastic resin; and
a low-refractive-index layer that is arranged on at least one surface of the base material layer and that has a refractive index lower than the refractive index of the base material layer, wherein
regarding a sample of the anti-reflection film obtained by being cut into a size of 210 mm×297 mm×0.3 mm (thickness), when the base material layer is preheated at 190°C for 40 seconds, the sample is placed in a mold including a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, in an area in which a pressure formed body obtained is in contact with the right angle-shaped portion of the mold, an elongation rate (%) that is a value obtained by formula:

(Length between predetermined two points after pressure forming - Length between the predetermined two points before pressure forming) / Length between the predetermined two points before pressure forming × 100 (%)

is equal to or more than a value of the deep drawing height (mm) of the mold × 10.

(24) An anti-reflection film comprising:

a base material layer including a thermoplastic resin; and
a low-refractive-index layer that is arranged on at least one surface of the base material layer and that has a refractive index lower than the refractive index of the base material layer, wherein
a value of the reflectivity on the surface of the low-refractive-index layer side measured under conditions of JIS Z 8722-2009 is 2.0% or less, and wherein
regarding a sample of the anti-reflection film obtained by being cut into a size of 210 mm×297 mm×0.3 mm (thickness), when the base material layer is preheated at 190°C for 40 seconds, the sample is placed in a mold including a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, the radius R of an area in which a pressure formed body obtained is in contact with the right angle-shaped portion of the mold is 3.0 mm or less.

(25) A layered product comprising a transparent resin base material and the anti-reflection film according to any one of (1) to (24).
(26) A method for producing an anti-reflection film, the method comprising the step of layering, on at least one surface of a base material layer including a thermoplastic resin, a low-refractive-index layer that has a refractive index lower than the refractive index of the base material layer, wherein
the low-refractive-index layer includes a polymer of a resin material including:

a urethane (meth)acrylate derived from

(a1) an aromatic diisocyanate compound and
(a2) one or more (meth)acryloyl compounds having a hydroxyl group and a (meth)acryloyl group per molecule, and

a (meth)acrylate.

ADVANTAGEOUS EFFECTS OF INVENTION

As described above, the anti-reflection film of the present invention has a base material layer and a low-refractive-index layer that is arranged on at least one surface of the base material layer and that has a refractive index lower than the refractive index of the base material layer. Further, the reflectivity on the surface of the low-refractive-index layer side of the anti-reflection film is sufficiently low, and in addition, the anti-reflection film has excellent thermoformability and also particularly excellent abrasion resistance.

Since the anti-reflection film of the present invention has the above-described excellent characteristics, it can be suitably used for applications including: display portions of a computer, a television, a plasma display and the like; a surface of a polarizing plate to be used for a liquid crystal display; a sunglass lens, a prescription glass lens, a finder lens for a camera; a cover for a measuring instrument; glass for a vehicle, glass for a train; a display panel for a vehicle and an electronic equipment casing.

BRIEF DESCRIPTION OF DRAWINGS

[Figure 1] Figure 1 is a cross sectional view showing the layered structure of the anti-reflection film of Example 1.
[Figure 2] Figure 2 is a cross sectional view showing the layered structure of the anti-reflection film of a specific example different from Example 1.
[Figure 3] Figure 3 shows elongation of an anti-reflection film, wherein grid-like lines at predetermined intervals were printed on its surface, after pressure forming.

DESCRIPTION OF EMBODIMENTS

Hereinafter, the present invention will be described in detail. Note that the present invention is not limited to the below-described embodiments, and can be arbitrarily changed and then carried out within a range in which the effects of the present invention are exerted.

[Anti-reflection film]

The anti-reflection film of the present invention has: a base material layer including a thermoplastic resin; and a low-refractive-index layer that is arranged on at least one surface of the base material layer and that has a refractive index lower than the refractive index of the base material layer. Hereinafter, respective layered members included in these anti-reflection films as layered products will be described.

[Base material layer]

The base material layer included in the anti-reflection film includes a thermoplastic resin. The type of the thermoplastic resin is not particularly limited, and various resins including a polycarbonate (PC) resin, an acrylic resin such as polymethyl methacrylate (PMMA), polyethylene terephthalate (PET), triacetyl cellulose (TAC), polyethylene naphthalate (PEN), polyimide (PI), a cycloolefin copolymer (COC), a norbomene-containing resin, polyether sulfone, cellophane and aromatic polyamide may be used. Among these materials, at least a polycarbonate resin is preferably included in the thermoplastic resin of the base material layer.
The polycarbonate resin that can be included in the base material layer is not particularly limited as long as it contains a carbonate ester bond in the main chain of the molecule, i.e., it contains a -[O-R-OCO]- unit (R includes an aliphatic group, an aromatic group, or both of the aliphatic group and the aromatic group, and further has a linear structure or a branched structure). A polycarbonate and the like having a bisphenol skeleton are preferred, and a polycarbonate having a bisphenol A skeleton or bisphenol C skeleton is particularly preferred. As the polycarbonate resin, a mixture or copolymer of bisphenol A and bisphenol C may be used. By using a bisphenol C-based polycarbonate resin such as a polycarbonate resin consisting of only bisphenol C and a polycarbonate resin of a mixture or copolymer of bisphenol C and bisphenol A, the hardness of the base material layer can be improved.
Further, the viscosity average molecular weight of the polycarbonate resin is preferably 15,000 to 40,000, more preferably 20,000 to 35,000, and even more preferably 22,500 to 25,000.
The acrylic resin that can be included in the base material layer is not particularly limited, and examples thereof include homopolymers of (meth)acrylic acid esters typified by polymethyl methacrylate (PMMA) and methyl methacrylate (MMA), copolymers of PMMA or MMA and at least one monomer other than that, and mixtures of a plurality of these resins. Among them, a (meth)acrylate including a cyclic alkyl structure excellent in low birefringence, low moisture absorbency and heat resistance is preferred. Examples of the above-described (meth)acrylic resins include, but are not limited to, ACRYPET (manufactured by Mitsubishi Rayon Co., Ltd.), DELPET (manufactured by Asahi Kasei Chemicals Corporation) and PARAPET (manufactured by Kuraray Co., Ltd.).
Note that use of a mixture including the polycarbonate resin and the above-described acrylic resin is preferred since the hardness of the base material layer, in particular, a surface layer (a layer on the high-refractive-index layer side) of the base material layer in a layered product can be improved by using such a mixture.
As a component other than the thermoplastic resin, an additive may be included in the base material layer.

Examples thereof include at least one additive selected from the group consisting of a thermal stabilizer, an antioxidant, a flame retardant, a flame retardant auxiliary agent, an ultraviolet absorber, a mold release agent and a coloring agent. Further, an antistatic agent, a fluorescent brightener, an antifog additive, a flowability improving agent, a plasticizer, a dispersant, an antimicrobial agent, etc. may also be added to the base material layer.

The base material layer includes the thermoplastic resin in an amount of preferably 80% by mass or more, more preferably 90% by mass or more, and particularly preferably 95% by mass or more. Further, in the thermoplastic resin of the base material layer, the polycarbonate resin is included in an amount of preferably 80% by mass or more, more preferably 90% by mass or more, and particularly preferably 95% by mass or more.

The base material layer preferably has a refractive index of 1.49 to 1.65. The refractive index of the base material layer is more preferably 1.49 to 1.60, even more preferably 1.51 to 1.60, and particularly preferably about 1.53 to 1.59.

The thickness of the base material layer is not particularly limited, but it is, for example, 30 μm to 1000 μm (1 mm), preferably 50 μm to 700 μm, more preferably 50 μm to 500 μm, and particularly preferably 100 μm to 500 μm. Further, two or more base material layers may be provided to the anti-reflection film, and in the case of providing a plurality of base material layers, the total thickness of the base material layers is, for example, 100 μm to 1000 μm, and preferably about 200 μm to 500 μm.

Examples of the above-described base material layer including a plurality of layers, i.e., the base material layer as a layered product having a plurality of layers include: a product obtained by layering, as a surface layer, an acrylic resin layer of the above-described acrylic resin such as a polymethyl (meth)acrylate resin (PMMA: polymethyl acrylate and/or polymethyl methacrylate) on a layer of the above-described polycarbonate (PC) such as bisphenol A; and a product obtained by layering a polycarbonate resin (PC) such as bisphenol C on a layer of a polycarbonate resin (PC) such as bisphenol A. In the case of a layered product obtained by layering a layer of a polycarbonate resin (PC) including bisphenol A and a polycarbonate resin (PC) including bisphenol C, for example, the polycarbonate resin including bisphenol C is used as a surface layer.

Further, as a surface layer, a layer having high hardness, in particular, a layer having a hardness higher than those of other base material layers is preferably used.

As the polycarbonate resin as the thermoplastic resin to be used in the base material layer as a layered product, the polycarbonate resins described for forming the base material layer having a single layer, i.e., those described above are suitably used. For example, a mixture or copolymer of bisphenol A and bisphenol C may be used. By using a bisphenol C-based polycarbonate resin such as a polycarbonate resin consisting of only bisphenol C and a polycarbonate resin of a mixture or copolymer of bisphenol C and bisphenol A, in particular, the effect of improving the hardness of the surface layer (the layer on the low-refractive-index layer side) of the base material layer in a layered product is obtained. Further, for further improving the hardness, a mixture obtained by adding the above-described acrylic resin to the polycarbonate resin such as the bisphenol C-based polycarbonate resin may be used.

[Low-refractive-index layer (anti-reflection layer)]

The anti-reflection film includes a low-refractive-index layer. The low-refractive-index layer is arranged on at least one surface of the base material layer. The low-refractive-index layer has a refractive index lower than the refractive index of the base material layer, and has an anti-reflection function.

For suppressing the reflection of the anti-reflection film, the low-refractive-index layer is preferably positioned at the outermost position of the anti-reflection film.

The low-refractive-index layer includes a polymer of a resin material including a urethane (meth)acrylate and a (meth)acrylate, each of which will be described in detail hereinlater, and preferably consists of only the polymer of a resin material including a urethane (meth)acrylate and a (meth)acrylate. Each of the components of the low-refractive-index layer will be described below.

<Urethane (meth)acrylate in resin material for low-refractive-index layer>

The urethane (meth)acrylate included in the resin material is derived from: (a1) an aromatic diisocyanate compound; and (a2) one or more (meth)acryloyl compounds having one hydroxyl group and at least one or more (meth)acryloyl group per molecule. More specifically, the urethane (meth)acrylate is preferably formed by a reaction product between aromatic diisocyanate compound (a1) and (meth)acryloyl compound (a2) described above.

(Aromatic diisocyanate compound (a1))

Aromatic diisocyanate compound (a1) is used as a component for forming the urethane (meth)acrylate. As aromatic diisocyanate compound (a1), wide variety of aromatic compounds having two isocyanate groups (-NCO groups)

can be used, and that having a single benzene ring or a plurality of benzene rings or a compound having an aromatic ring may be used, for example.

As aromatic diisocyanate compound (a1), an aromatic diisocyanate compound represented by formula (1) below can be used, for example.

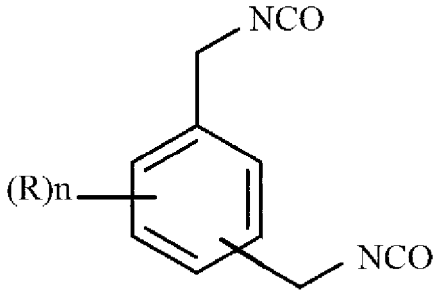

(1)

In formula (1), R is each independently a linear or branched alkyl group having 1 to 6 carbon atoms or an aromatic ring having 6 to 12 carbon atoms, each optionally having a substituent group or a halogen, and n is an integer of 0 to 4.

R is preferably an alkyl group having 1 to 3 carbon atoms and optionally having a substituent group, and examples of the substituent include an alkoxy group.

n is preferably an integer of 0 to 2, and more preferably 0 or 1.

Alternatively, an aromatic diisocyanate compound may be used that can be obtained by bonding one or both of the isocyanate groups (-NCO groups) directly to the benzene ring via no methylene group in formula (1). Examples thereof include an aromatic diisocyanate compound having a benzene ring with isocyanate groups (-NCO groups) directly bonding thereto, such as toluene diisocyanate (2,4-toluene diisocyanate, 2,6-toluene diisocyanate).

Specific examples of aromatic diisocyanate compound (a1) include: aromatic diisocyanate compounds, including m- or p-phenylene diisocyanate, 2,4- or 2,6-tolylene diisocyanate, 4,4'-, 2,4'- or 2,2'-diphenylmethane diisocyanate (MDI), toluene diisocyanate (2,4-toluene diisocyanate, 2,6-toluene diisocyanate), trimethylolpropane (TMP) adduct of toluene diisocyanate, an isocyanate of toluene diisocyanate, a toluidine diisocyanate such as 4,4'-toluidine diisocyanate, a diphenyl ether diisocyanate such as 4,4'-diphenyl ether diisocyanate, a naphthalene diisocyanate such as 1,5- or 2,6-naphthalene diisocyanate, xylene diisocyanate (XDI; 1,3-bis(isocyanatomethyl)benzene), and a TMP adduct of xylene diisocyanate; and araliphatic diisocyanate compounds, including m- or p-xylylene diisocyanate, and tetramethylxylylene diisocyanate such as 1,3- or 1,4-tetramethylxylylene diisocyanate. A preferred specific example of aromatic diisocyanate compound (a1) includes xylene diisocyanate.

((Meth)acryloyl compound (a2))

(Meth)acryloyl compound (a2) used for forming the urethane (meth)acrylate has one or more hydroxyl groups and at least one or more (meth)acryloyl groups.

The number of hydroxyl groups of (meth)acryloyl compound (a2) is 1 to 3, for example, and (meth)acryloyl compound (a2) having only one hydroxyl group is preferred.

(Meth)acryloyl compound (a2) preferably has 1 to 3 (meth)acryloyl groups, and for example, a monofunctional (meth)acryloyl compound having a single (meth)acryloyl group, (a2-1), and a trifunctional (meth)acryloyl compound having three (meth)acryloyl groups, (a2-2), are preferable.

As (meth)acryloyl compound (a2), a single kind of compound may be used, or a mixture of a plurality of kinds of compounds may be used. For example, (meth)acryloyl compound (a2) includes monofunctional compound having one (meth)acryloyl group per molecule, (a2-1), trifunctional compound having three (meth)acryloyl groups per molecule, (a2-2), and the like. As (meth)acryloyl compound (a2), either the monofunctional compound or the trifunctional compound may be used, or a mixture (mixed liquid) obtained by mixing the monofunctional compound and the trifunctional compound may be used. As monofunctional compound (a2-1), a single kind of compound or a mixture of a plurality of kinds of compounds may be used, and the same is also applied to trifunctional compound (a2-2).

In a case where compound having one (meth)acryloyl group per molecule, (a2-1), and trifunctional compound having three (meth)acryloyl groups per molecule, (a2-2), are used as (meth)acryloyl compound (a2), they are preferably used in a molar ratio (a2-1)/(a2-2) of 80/20 to 0/100. They may be mixed in a molar ratio (a2-1)/(a2-2) of 80/20 to 20/80, or, in a molar ratio (a2-1)/(a2-2) of 70/30 to 30/70 or a molar ratio (a2-1)/(a2-2) of 60/40 to 40/60, or the same amounts of them may be mixed.

Alternatively, a difunctional or tetrafunctional (meth)acryloyl compound may be used instead of trifunctional

compound (a2-2), in the above-described ratio for trifunctional compound (a2-2).

Specific examples of (meth)acryloyl compound (a2), which is a hydroxyl group-containing acrylate, include, but not particularly limited to, a monofunctional or trifunctional (meth)acryloyl compound, such as 2-hydroxyethyl acrylate, 2-hydroxypropyl acrylate, 2-hydroxybutyl acrylate, 4-hydroxybutyl acrylate, 2-hydroxy-3-phenoxypropyl acrylate, 2-acryloyloxyethyl-2-hydroxyethyl-phthalic acid, 2-acryloyloxyethyl acid phosphate, caprolactone-modified 2-hydroxyethyl acrylate, 2-hydroxy-3-acryloyloxypropyl acrylate, pentaerythritol triacrylate, ethoxylated pentaerythritol triacrylate, propoxylated pentaerythritol triacrylate, and caprolactone-modified 2-hydroxyethyl acrylate.

Other specific examples of (meth)acryloyl compound (a2) include 2-hydroxyethyl (meth)acrylate, 2-hydroxypropyl (meth)acrylate, 2-hydroxybutyl (meth)acrylate, 4-hydroxybutyl (meth)acrylate, 2-hydroxy-3-phenoxypropyl (meth)acrylate, 2-(meth)acryloyloxyethyl-2-hydroxyethyl-phthalic acid, 2-(meth)acryloyloxyethyl acid phosphate caprolactone-modified 2-hydroxyethyl (meth)acrylate, 2-hydroxy-3-acryloyloxypropyl (meth)acrylate, pentaerythritol tri(meth)acrylate, ethoxylated pentaerythritol tri(meth)acrylate, propoxylated pentaerythritol tri(meth)acrylate, and caprolactone-modified 2-hydroxyethyl (meth)acrylate.

The (meth)acrylate described herein can encompass both acrylate and methacrylate.

Preferred specific examples of (meth)acryloyl compound (a2) include pentaerythritol tri(meth)acrylate, 2-hydroxyethyl (meth)acrylate, 2-hydroxypropyl (meth)acrylate, 2-hydroxybutyl (meth)acrylate, 4-hydroxybutyl (meth)acrylate, caprolactone (meth)acrylate, and 2-hydroxy-3-phenoxypropyl (meth)acrylate.

(Urethane (meth)acrylate)

The urethane (meth)acrylate produced as a reaction product between aromatic diisocyanate compound (a1) and (meth)acryloyl compound (a2) described above preferably has two to six (meth)acryloyl groups. For example, a mixture of a monofunctional (meth)acryloyl compound (a2-1) and a trifunctional (meth)acryloyl compound (a2-2) may be reacted with aromatic diisocyanate compound (a1) to obtain urethane (meth)acrylates having two, four, and six (meth)acryloyl groups, which may be used as the resin material. The resin material to be used may be a mixture of urethane (meth)acrylates having two to six (e.g., two, four, and six) (meth)acryloyl groups, or may be a specific urethane (meth)acrylate alone.

The ratio between aromatic diisocyanate compound (a1) and the total of (meth)acryloyl compound (a2) for forming the urethane (meth)acrylate is preferably 20:80 to 75:25 (weight ratio), more preferably 30:70 to 60:40, even more preferably 35:65 to 55:45.

<(Meth)acrylate (compound) of resin material of low-refractive-index layer>

The resin material for the low-refractive-index layer includes a (meth)acrylate compound in addition to the above-described urethane (meth)acrylate. In other words, it is preferable that the resin material for the low-refractive-index layer should be obtained as a mixture (mixed liquid) including the above-described urethane (meth)acrylate and a (meth)acrylate compound, and it is preferable that the low-refractive-index layer is formed as a polymer of such a mixture as the resin material.

The (meth)acrylate compound as one component of the resin material is preferably a substituted or unsubstituted compound having 4 to 20 carbon atoms including at least one (meth)acryloyl group and at least one vinyl ether group. The number of carbon atoms of the (meth)acrylate is preferably 6 to 18, and more preferably 8 to 16. Examples of substituents of the (meth)acrylate include an alkyl group.

As the (meth)acrylate, 2-(2-vinyloxyethoxy)ethyl (meth)acrylate [2-(2-vinyloxyethoxy)ethyl acrylate: VEEA] of the formula below:

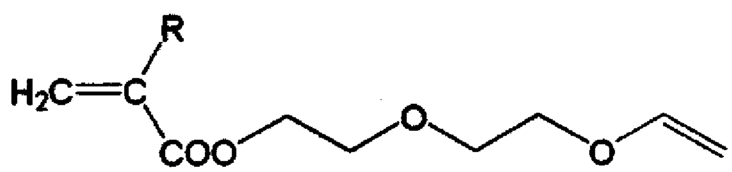

wherein R is hydrogen or a methyl group,
is used, for example.

Specific examples of the (meth)acrylate compound included in the resin material include:

alkanediol di(meth)acrylates, such as ethylene glycol di(meth)acrylate, propylene glycol di(meth)acrylate, 1,3-propanediol di(meth)acrylate, 1,4-butanediol di(meth)acrylate, neopentyl glycol di(meth)acrylate, and 1,6-hexanediol

di(meth)acrylate;
alkane polyol di(meth)acrylates, such as glycerine di(meth)acrylate;
polyalkylene glycol di(meth)acrylates, such as diethylene glycol di(meth)acrylate, triethylene glycol di(meth)acrylate, polyethylene glycol di(meth)acrylate, dipropylene glycol di(meth)acrylate, and polypropylene glycol di(meth)acrylate;
a di(meth)acrylate of an acid-modified alkane polyol such as fatty acid-modified pentaerythritol;
alkane polyol (meth)acrylates, such as a bridged cyclic di(meth)acrylate (such as tricyclodecanedimethanol di(meth)acrylate), trimethylolpropane tri(meth)acrylate, glycerin tri(meth)acrylate, pentaerythritol tri(meth)acrylate, pentaerythritol tetra(meth)acrylates, tetramethylolmethane tetra(meth)acrylates, dipentaerythritol penta(meth)acrylates, and dipentaerythritol hexa(meth)acrylates;
tri(meth)acrylates of C2-4 alkylene oxide adducts of alkane polyols such as trimethylolpropane and glycerin; and
tri(meth)acrylates having a triazine ring, such as tris(2-hydroxyethyl)isocyanurate tri(meth)acrylate.

Other specific examples of the (meth)acrylate compound included in the resin material include a bisphenol A di(meth)acrylate compound having an ethoxy group. Preferred specific examples of the bisphenol A di(meth)acrylate compound having an ethoxy group include ethoxylated (3 mol) bisphenol A di(meth)acrylate, ethoxylated (4 mol) bisphenol A di(meth)acrylate, ethoxylated (10 mol) bisphenol A di(meth)acrylate, and propoxylated (3 mol) bisphenol A diacrylate, and a more preferred specific example is ethoxylated (4 mol) bisphenol A di(meth)acrylate.

In the resin material for forming the low-refractive-index layer, the ratio between the urethane (meth)acrylate and the (meth)acrylate compound ((meth)acrylate) is preferably 95:5 to 70:30 (weight ratio), more preferably 93:7 to 80:20, and even more preferably 90:10 to 85:15. In the resin material for the low-refractive-index layer, the ratio between the urethane (meth)acrylate and the (meth)acrylate compound may be 99:1 to 60:40.

<Low-refractive-index member>

The low-refractive-index layer preferably includes a low-refractive-index member. The low-refractive-index member is added in order to reduce the refractive index of the low-refractive-index layer. Specifically, by forming the low-refractive-index layer using the low-refractive-index member, the difference between the refractive index of the low-refractive-index member and the refractive index of the base material layer can be increased and the reflectivity of the anti-reflection film can be reduced more.

As the low-refractive-index member, silica, a metal fluoride particle, etc. are preferred, and silica, in particular, a hollow silica is more preferred. In the case of using the metal fluoride particle, examples of the metal fluoride included in the particle include magnesium fluoride, aluminum fluoride, calcium fluoride and lithium fluoride.

The low-refractive-index member is preferably a particulate member. The particle size (diameter: average particle size) of the particulate low-refractive-index member is not particularly limited, but it is, for example, 10 to 200 nm, preferably 30 to 100 nm, more preferably 35 to 80 nm, and particularly preferably 45 to 65 nm.

The (average) particle size of the particulate low-refractive-index member is measured by, for example, the dynamic light scattering method in accordance with JIS Z 8828:2019 (ISO 22412:2017).

<Refractive index of low-refractive-index layer>

The value of the refractive index of the low-refractive-index layer is lower than the value of the refractive index of the base material layer. The refractive index of the low-refractive-index layer is preferably 1.31 to 1.40, more preferably 1.32 to 1.39, and even more preferably about 1.33 to 1.38.

Further, the difference between the refractive index of the low-refractive-index layer and the refractive index of the base material layer is preferably at least 0.09, more preferably at least 0.12, even more preferably at least 0.15, and particularly preferably at least 0.17. By increasing the difference between the value of the refractive index of the low-refractive-index layer and the value of the refractive index of the base material layer as described above, the reflectivity of the surface at the low-refractive-index layer side of the anti-reflection film can be increased.

<Other components>

The low-refractive-index layer or the resin material forming the low-refractive-index layer preferably includes at least one of a photoinitiator (photopolymerization initiator) and a leveling agent, and particularly preferably includes a photoinitiator. A solvent may also be included in the resin material for the low-refractive-index layer. Examples of the leveling agent include a fluorine-based leveling agent and a silicone-based leveling agent.

The low-refractive-index layer includes the resin material for the low-refractive-index layer and the low-refractive-index member at a weight ratio of preferably 20:80 to 70:30, more preferably 30:70 to 65:35, and even more preferably 35:65 to 60:40.

The thickness of the low-refractive-index layer is not particularly limited, but it is preferably 10 to 200 nm, more preferably 30 to 160 nm, even more preferably 50 to 120 nm, and particularly preferably 80 to 110 nm.

[High-refractive-index layer (anti-reflection layer)]

The anti-reflection film may include a high-refractive-index layer. The high-refractive-index layer has a refractive index higher than the refractive index of the base material layer, and the high-refractive-index layer included in the anti-reflection film also has an anti-reflection function like the low-refractive-index layer. Such a high-refractive-index layer is used as an anti-reflection layer in the layered product. The high-refractive-index layer is preferably arranged between the low-refractive-index layer and the base material layer.

The high-refractive-index layer includes a polymer of a resin material including a urethane (meth)acrylate derived from a fluorene-based diol, an isocyanate and a (meth)acrylate and a (meth)acrylate. Specifically, the high-refractive-index layer is preferably a mixture of at least a urethane (meth)acrylate obtained by performing a dehydration condensation reaction of three components, i.e., a fluorene-based diol, an isocyanate and a (meth)acrylate and a (meth)acrylate.

<Urethane (meth)acrylate in resin material for high-refractive-index layer>

The urethane (meth)acrylate included in the resin material of the high-refractive-index layer preferably includes at least a component represented by formula (I):

(A3)-O(OC)HN-A2-HN(OC)-O-A1-O-(CO)NH-A2-NH-(CO)O-(A3)... (I)

In formula (I),

A1 is a substituted or unsubstituted alkylene group derived from a fluorene-based diol having 8 to 60 carbon atoms in total;
A2s are each independently a substituted or unsubstituted alkylene group derived from an aromatic isocyanate having 6 to 20 carbon atoms in total; and
A3s are each independently a substituted or unsubstituted alkyl group having 4 to 30 carbon atoms in total and including at least one (meth)acryloyloxy group, and are each derived from a (meth)acrylate.

Fluorene-based diol (A1)

The alkylene group of A1 described above is derived from, for example, a fluorene-based diol optionally having an aryl group, such as a phenyl group, as a substituent, and the fluorene-based diol preferably has 12 to 54 carbon atoms in total, even more preferably has 16 to 48 carbon atoms in total, and particularly preferably has 20 to 40 carbon atoms in total.

Typical specific examples of the fluorene-based diol for forming the structural unit of A1, i.e., a compound having a fluorene skeleton include the below-described materials. In this specification, the fluorene-based diol includes a fluorene compound including at least three hydroxyl groups.

Specifically, examples of the fluorene-based diol having two hydroxyl groups include 9,9-bis(hydroxyphenyl)fluorenes, 9,9-bis(hydroxy(poly)alkoxyphenyl)fluorenes, 9,9-bis(hydroxynaphthyl)fluorenes and 9,9-bis(hydroxy(poly)alkoxynaphthyl)fluorenes.

Examples of the fluorene-based diol having at least three hydroxyl groups include 9,9-bis(polyhydroxyphenyl)fluorenes, 9,9-bis[poly(hydroxy(poly)alkoxy)phenyl]fluorenes, 9,9-bis(polyhydroxynaphthyl)fluorenes and 9,9-bis[poly(hydroxy(poly)alkoxy)naphthyl]fluorenes.

Examples of 9,9-bis(hydroxyphenyl)fluorenes include 9,9-bis(hydroxyphenyl)fluorene [9,9-bis(4-hydroxyphenyl)fluorene (bisphenol fluorene), etc.] and 9,9-bis(hydroxyphenyl)fluorene having a substituent {e.g., 9,9-bis(alkyl-hydroxyphenyl)fluorene [9,9-bis(mono- or di- C1-4 alkyl-hydroxyphenyl)fluorene such as 9,9-bis(4-hydroxy-3-methylphenyl)fluorene (biscresol fluorene), 9,9-bis(4-hydroxy-3-ethylphenyl)fluorene, 9,9-bis(4-hydroxy-3-butylphenyl)fluorene, 9,9-bis(3-hydroxy-2-methylphenyl)fluorene, 9,9-bis(4-hydroxy-3,5-dimethylphenyl)fluorene and 9,9-bis(4-hydroxy-2,6-dimethylphenyl)fluorene, etc.], 9,9-bis(cycloalkyl-hydroxyphenyl)fluorene [9,9-bis(mono- or di- C5-8 cycloalkyl-hydroxyphenyl)fluorene such as 9,9-bis(4-hydroxy-3-cyclohexylphenyl)fluorene, etc.], 9,9-bis(aryl-hydroxyphenyl)fluorene [9,9-bis(mono- or di- C6-8 aryl-hydroxyphenyl)fluorene such as 9,9-bis(4-hydroxy-3-phenylphenyl)fluorene, etc.], 9,9-bis(aralkyl-hydroxyphenyl)fluorene [9,9-bis(C6-8 aryl C1-2 alkyl-hydroxyphenyl)fluorene such as 9,9-bis(4-hydroxy-3-benzylphenyl)fluorene, etc.], etc.}.

Examples of 9,9-bis(hydroxy(poly)alkoxyphenyl)fluorenes include 9,9-bis(hydroxyalkoxyphenyl)fluorene {e.g.,

9,9-bis(hydroxy C2-4 alkoxyphenyl)fluorene such as 9,9-bis[4-(2-hydroxyethoxy)phenyl]fluorene, 9,9-bis[4-(2-hydroxypropoxy)phenyl]fluorene, 9,9-bis[4-(3-hydroxypropoxy)phenyl]fluorene and 9,9-bis[4-(4-hydroxybutoxy)phenyl]fluorene, etc.}, 9,9-bis(hydroxyalkoxy-alkylphenyl)fluorene {e.g., 9,9-bis(hydroxy C2-4 alkoxy-mono- or di- C1-6 alkylphenyl)fluorene such as 9,9-bis[4-(2-hydroxyethoxy)-3-methylphenyl]fluorene [or 2,2'-dimethyl-4,4'-(9-fluorenylidene)-bisphenoxyethanol], 9,9-bis[2-(2-hydroxyethoxy)-5-methylphenyl]fluorene, 9,9-bis[4-(2-hydroxyethoxy)-3-ethylphenyl]fluorene, 9,9-bis[4-(2-hydroxyethoxy)-3-propylphenyl]fluorene, 9,9-bis[4-(3-hydroxypropoxy)-3-methylphenyl]fluorene, 9,9-bis[4-(4-hydroxybutoxy)-3-methylphenyl]fluorene, 9,9-bis[4-(2-hydroxyethoxy)-3,5-dimethylphenyl]fluorene [or 2,2',6,6'-tetramethyl-4,4'-(9-fluorenylidene)-bisphenoxyethanol], 9,9-bis[4-(2-hydroxyethoxy)-3,5-diethylphenyl]fluorene, 9,9-bis[4-(3-hydroxypropoxy)-3,5-dimethylphenyl]fluorene and 9,9-bis[4-(4-hydroxybutoxy)-3,5-dimethylphenyl]fluorene, etc.}, 9,9-bis(hydroxyalkoxy-cycloalkylphenyl)fluorene {e.g., 9,9-bis(hydroxy C2-4 alkoxy-mono- or di- C5-8 cycloalkylphenyl)fluorene such as 9,9-bis[4-(2-hydroxyethoxy)-3-cyclohexylphenyl]fluorene, etc.}, 9,9-bis(hydroxyalkoxy-arylphenyl)fluorene {e.g., 9,9-bis(hydroxy C2-4 alkoxy-mono- or di- C6-8 arylphenyl)fluorene such as 9,9-bis[4-(2-hydroxyethoxy)-3-phenylphenyl]fluorene [or 2,2'-diphenyl-4,4'-(9-fluorenylidene)-bisphenoxyethanol] and 9,9-bis[4-(2-hydroxyethoxy)-3,5-diphenylphenyl]fluorene, etc.}, 9,9-bis(hydroxyalkoxy-aralkylphenyl)fluorene {e.g., 9,9-bis[hydroxy C2-4 alkoxy-mono- or di- (C6-8 aryl C1-4 alkyl)phenyl]fluorene such as 9,9-bis[4-(2-hydroxyethoxy)-3-benzylphenyl]fluorene and 9,9-bis[4-(2-hydroxyethoxy)-3,5-dibenzylphenyl]fluorene}, and 9,9-bis(hydroxypolyalkoxyphenyl)fluorenes, which correspond to these 9,9-bis(hydroxyalkoxyphenyl)fluorenes {e.g., 9,9-bis[(hydroxy C2-4 alkoxy) C2-4 alkoxyphenyl]fluorene such as 9,9-bis{4-[2-(2-hydroxyethoxy)ethoxy]phenyl I fluorene, etc.}.

Examples of 9,9-bis(hydroxynaphthyl)fluorenes include 9,9-bis(hydroxynaphthyl)fluorenes {e.g., substituted or unsubstituted 9,9-bis(monohydroxynaphthyl)fluorene such as 9,9-bis[6-(2-hydroxynaphthyl)]fluorene (or 6,6-(9-fluorenylidene)-di(2-naphthol)), 9,9-bis[1-(6-hydroxynaphthyl)]fluorene (or 5,5-(9-fluorenylidene)-di(2-naphthol)) and 9,9-bis[1-(5-hydroxynaphthyl)]fluorene (or 5,5-(9-fluorenylidene)-di(1-naphthol))}.

Examples of 9,9-bis(hydroxy(poly)alkoxynaphthyl)fluorenes include compounds corresponding to the 9,9-bis(hydroxynaphthyl)fluorenes such as 9,9-bis(hydroxyalkoxynaphthyl)fluorene {e.g., substituted or unsubstituted 9,9-bis(hydroxy C2-4 alkoxynaphthyl)fluorene such as 9,9-bis[6-(2-(2-hydroxyethoxy)naphthyl)]fluorene, 9,9-bis[1-(6-(2-hydroxyethoxy)naphthyl)]fluorene [or 5,5'-(9-fluorenylidene)-bis(2-naphthyloxyethanol)] and 9,9-bis[1-(5-(2-hydroxyethoxy)naphthyl)]fluorene, etc.}.

Examples of 9,9-bis(polyhydroxyphenyl)fluorenes include 9,9-bis(dihydroxyphenyl)fluorenes and 9,9-bis(trihydroxyphenyl)fluorenes. Examples of 9,9-bis(dihydroxyphenyl)fluorenes include 9,9-bis(dihydroxyphenyl)fluorene [9,9-bis(3,4-dihydroxyphenyl)fluorene (biscatechol fluorene), 9,9-bis(3,5-dihydroxyphenyl)fluorene, etc.], and substituted 9,9-bis(dihydroxyphenyl)fluorene {e.g., 9,9-bis(alkyl-dihydroxyphenyl)fluorene [9,9-bis(mono- or di- C1-4 alkyl-dihydroxyphenyl)fluorene such as 9,9-bis(3,4-dihydroxy-5-methylphenyl)fluorene, 9,9-bis(3,4-dihydroxy-6-methylphenyl)fluorene and 9,9-bis(2,4-dihydroxy-3,6-dimethylphenyl)fluorene, etc.], 9,9-bis(aryl-dihydroxyphenyl)fluorene [e.g., 9,9-bis(mono- or di- C6-8 aryl-dihydroxyphenyl)fluorene such as 9,9-bis(3,4-dihydroxy-5-phenylphenyl)fluorene, etc.], 9,9-bis(alkoxy-dihydroxyphenyl)fluorene [e.g., 9,9-bis(mono- or di- C1-4 alkoxy-dihydroxyphenyl)fluorene such as 9,9-bis(3,4-dihydroxy-5-methoxyphenyl)fluorene], etc.}.

Examples of 9,9-bis(trihydroxyphenyl)fluorenes include 9,9-bis(trihydroxyphenyl)fluorene [e.g., 9,9-bis(2,4,6-trihydroxyphenyl)fluorene, 9,9-bis(2,4,5-trihydroxyphenyl)fluorene, 9,9-bis(3,4,5-trihydroxyphenyl)fluorene, etc.].

Examples of 9,9-bis[poly(hydroxy(poly)alkoxy)phenyl]fluorenes include 9,9-bis[di(hydroxy(poly)alkoxy)phenyl]fluorenes and 9,9-bis[tri(hydroxy(poly)alkoxy)phenyl]fluorenes.

Examples of 9,9-bis[di(hydroxy(poly)alkoxy)phenyl]fluorenes include: 9,9-bis[di(hydroxyalkoxy)phenyl]fluorenes such as 9,9-bis[di(hydroxyalkoxy)phenyl]fluorene {e.g., 9,9-bis[di(hydroxy C2-4 alkoxy)phenyl]fluorene such as 9,9-bis[3,4-di(2-hydroxyethoxy)phenyl]fluorene [or 2,2'-bishydroxyethoxy-4,4'-(9-fluorenylidene)-bisphenoxyethanol], 9,9-bis[3,5-di(2-hydroxyethoxy)phenyl]fluorene [or 3,3'-bishydroxyethoxy-5,5'-(9-fluorenylidene)-bisphenoxyethanol], 9,9-bis[3,4-di(3-hydroxypropoxy)phenyl]fluorene, 9,9-bis[3,5-di(3-hydroxypropoxy)phenyl]fluorene, 9,9-bis[3,4-di(2-hydroxypropoxy)phenyl]fluorene, 9,9-bis[3,5-di(2-hydroxypropoxy)phenyl]fluorene, 9,9-bis[3,4-di(4-hydroxybutoxy)phenyl]fluorene and 9,9-bis[3,5-di(4-hydroxybutoxy)phenyl]fluorene}, and substituted 9,9-bis[di(hydroxyalkoxy)phenyl]fluorene {e.g., 9,9-bis[alkyl-di(hydroxyalkoxy)phenyl]fluorene [e.g., 9,9-bis[mono- or di- C1-4 alkyl-di(hydroxy C2-4 alkoxy)phenyl]fluorene such as 9,9-bis[3,4-di(2-hydroxyethoxy)-5-methylphenyl]fluorene, 9,9-bis[3,4-di(2-hydroxyethoxy)-6-methylphenyl]fluorene and 9,9-bis[2,4-di(2-hydroxyethoxy)-3,6-dimethylphenyl]fluorene, etc.], 9,9-bis[aryl-di(hydroxyalkoxy)phenyl]fluorene [e.g., 9,9-bis[mono- or di- C6-8 aryl-di(hydroxy C2-4 alkoxy)phenyl]fluorene such as 9,9-bis[3,4-di(2-hydroxyethoxy)-5-arylphenyl]fluorene, etc.], 9,9-bis[alkoxy-di(hydroxyalkoxy)phenyl]fluorene [e.g., 9,9-bis[mono- or di- C1-4 alkoxy-di(hydroxy C2-4 alkoxy)phenyl]fluorene such as 9,9-bis[3,4-di(2-hydroxyethoxy)-5-methoxyphenyl]fluorene, etc.], etc.}; and 9,9-bis[di(hydroxypolyalkoxy)phenyl]fluorenes which correspond to these 9,9-bis[di(hydroxyalkoxy)phenyl]fluorenes {e.g., 9,9-bis[di(hydroxy C2-4 alkoxy C2-4 alkoxy]phenyl]fluorene such as 9,9-bis{3,4-di[2-(2-hydroxyethoxy)ethoxy]phenyl}fluorene and 9,9-bis{3,5-di[2-(2-hydroxyethoxy)ethoxy]phenyl}fluorene, etc.}.

Examples of 9,9-bis[tri(hydroxy(poly)alkoxy)phenyl]fluorenes include compounds which correspond to the 9,9-bis[di(hydroxy(poly)alkoxy)phenyl]fluorenes such as 9,9-bis[tri(hydroxyalkoxy)phenyl]fluorene {e.g., 9,9-bis[tri(hydroxy C2-4 alkoxy)phenyl]fluorene such as 9,9-bis[2,3,4-tri(2-hydroxyethoxy)phenyl]fluorene [or 2,2',6,6'-tetrahydroxyethoxy-5,5'-(9-fluorenylidene)-bisphenoxyethanol], 9,9-bis[2,4,6-tri(2-hydroxyethoxy)phenyl]fluorene, 9,9-bis[2,4,5-tri(2-hydroxyethoxy)phenyl] fluorene and 9,9-bis[3,4,5-tri(2-hydroxyethoxy)phenyl]fluorene} and 9,9-bis[tri(hydroxypolyalkoxy)phenyl]fluorenes which correspond to these 9,9-bis[tri(hydroxyalkoxy)phenyl]fluorenes {e.g., 9,9-bis[tri(hydroxy C2-4 alkoxy C2-4 alkoxy]phenyl]fluorene (compound wherein n=2) such as 9,9-bis{2,4,6-tri[2-(2-hydroxyethoxy)ethoxy]phenyl}fluorene, 9,9-bis{2,4,5-tri[2-(2-hydroxyethoxy)ethoxy]phenyl}fluorene and 9,9-bis{3,4,5-tri[2-(2-hydroxyethoxy)ethoxy]phenyl}fluorene, etc.}.

Examples of 9,9-bis(polyhydroxynaphthyl)fluorenes include compounds which correspond to the 9,9-bis(hydroxynaphthyl)fluorenes such as 9,9-bis(di- or trihydroxynaphthyl)fluorene.

Examples of 9,9-bis[poly(hydroxy(poly)alkoxy)naphthyl]fluorenes include compounds which correspond to the 9,9-bis(hydroxy(poly)alkoxynaphthyl)fluorenes such as 9,9-bis[di- or tri- (hydroxy(poly)alkoxy)naphthyl]fluorenes including 9,9-bis[di- or tri- (hydroxy C2-4 alkoxy)naphthyl]fluorene.

Preferred specific examples of the above-described fluorene-based diol include 9,9-bis[4-(2-hydroxyethoxy)phenyl]fluorene.

Isocyanate (A2)

The alkylene group of A2 described above is derived from, for example, an aromatic isocyanate optionally having an alkyl group, such as a methyl group, as a substituent, and the aromatic isocyanate preferably has 6 to 16 carbon atoms in total, even more preferably has 7 to 14 carbon atoms in total, and particularly preferably has 8 to 12 carbon atoms in total.

The isocyanate for forming the structural unit of A2 described above is preferably an aromatic isocyanate, which can easily attain a high-refractive-index; however, aliphatic and alicyclic isocyanates, etc. may also be used.

Examples thereof include polyisocyanates such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethyl hexamethylene diisocyanate, tetramethyl xylylene diisocyanate, isophorone diisocyanate, norbornene diisocyanate, 1,3-bis(isocyanatomethyl)cyclohexane, phenylene diisocyanate, lysine diisocyanate, lysine triisocyanate and naphthalene diisocyanate or trimer compounds or tetramer compounds of these polyisocyanates, burette-type polyisocyanates, water dispersion-type polyisocyanates (e.g., "Aquanate 100", "Aquanate 110", "Aquanate 200" and "Aquanate 210" manufactured by Nippon Polyurethane Industry Co., Ltd., etc.), or reaction products of these polyisocyanates and a polyol.

Among these isocyanates, diphenylmethane diisocyanate, toluene diisocyanate, naphthalene diisocyanate, trimethylolpropane (TMP) adduct of toluene diisocyanate, isocyanurate of toluene diisocyanate, and TMP adduct of xylene diisocyanate are preferable, for example.

(Meth)acryloyloxy group-containing alkyl group (A3)

The alkyl group of A3 described above may have a substituent group, such as an alkoxy group or an aryloxy group, and is preferably an alkyl group having 6 to 24 carbon atoms in total, and more preferably 8 to 20 carbon atoms in total. The number of the (meth)acryloyloxy groups in the alkyl group of A3 is preferably 1 to 3.

Preferred specific examples of the above-described component for forming the alkyl group of A3 include monofunctional (meth)acrylic compounds having a hydroxyl group.

Examples of the monofunctional (meth)acrylic compounds having a hydroxyl group include hydroxyl group-containing mono(meth)acrylates {e.g., hydroxyalkyl (meth)acrylates [e.g., hydroxy C2-20 alkyl-(meth)acrylate such as 2-hydroxyethyl (meth)acrylate, 3-hydroxypropyl (meth)acrylate and 6-hydroxyhexyl (meth)acrylate, preferably hydroxy C2-12 alkyl-(meth)acrylate, and more preferably hydroxy C2-6 alkyl-(meth)acrylate], polyalkylene glycol mono(meth)acrylates [e.g., poly C2-4 alkylene glycol mono(meth)acrylate such as diethylene glycol mono(meth)acrylate and polyethylene glycol mono(meth)acrylate], mono(meth)acrylates of polyol having at least three hydroxyl groups [e.g., alkane polyol mono(meth)acrylate such as glycerol mono(meth)acrylate and trimethylolpropane mono(meth)acrylate, mono(meth)acrylate of multimer of alkane polyol such as diglycerol mono(meth)acrylate, etc.], etc.}, N-hydroxyalkyl (meth)acrylamides (e.g., N-hydroxy C1-4 alkyl (meth)acrylamide such as N-methylol (meth)acrylamide and N-(2-hydroxyethyl) (meth)acrylamide, etc.), and adducts (e.g., adducts in which about 1 to 5 mol of lactone is added) which are obtained by adding lactone (e.g., C4-10 lactone such as ε-caprolactone) to a hydroxyl group of these compounds (e.g., hydroxyalkyl (meth)acrylate).

Note that these (meth)acrylic compounds may be used solely, or two or more of them may be used in combination.

Preferred specific examples of the compound for forming the (meth)acryloyloxy group-containing alkyl group

(A3) include 2-hydroxy-3-phenoxypropyl acrylate.

Preferred specific examples of the urethane (meth)acrylate included in the resin material described above include the compounds of formula (II) to (V) below.

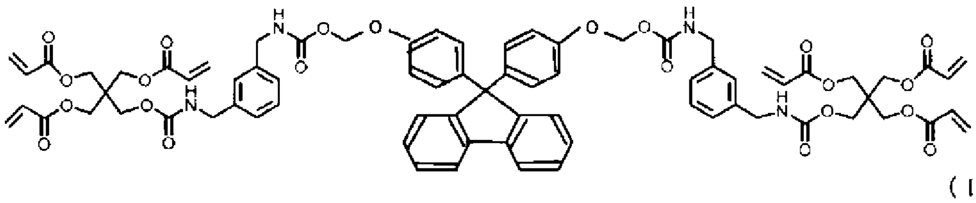

(I I)

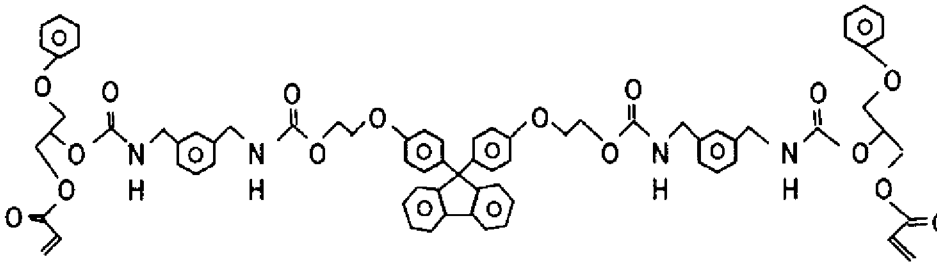

(I I I)

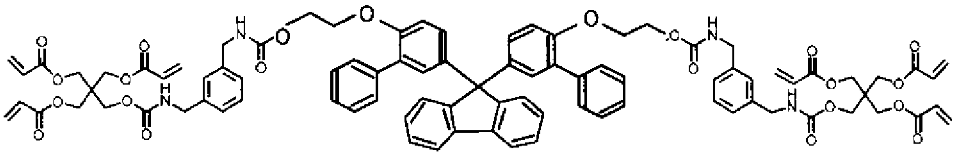

(I V)

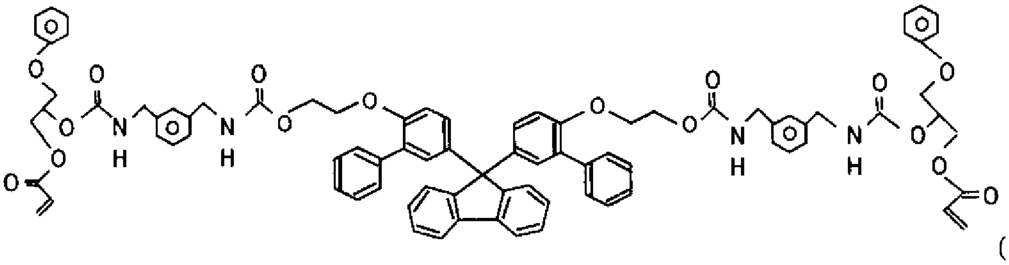

(V)

<Urethane (meth)acrylate of resin material for high-refractive-index layer>

The above-described resin material, that is, the same compounds as those for the (meth)acrylate included in the resin material for the low-refractive-index layer can be employed as the (meth)acrylate included in the resin material for the high-refractive-index layer.

As the (meth)acrylate for forming the high-refractive-index layer, a substituted or unsubstituted compound having 4 to 20 carbon atoms including at least one (meth)acryloyloxy group and at least one vinyl ether group is used, for example. The carbon number of the (meth)acrylate is preferably 6 to 18, and more preferably 8 to 16. Examples of substituents of the (meth)acrylate include an alkyl group.

As the (meth)acrylate, for example, 2-(2-vinyloxyethoxy)ethyl (meth)acrylate (VEEA) is used.

<High-refractive-index member>

The high-refractive-index layer preferably includes a high-refractive-index member. The high-refractive-index member is added in order to increase the value of the refractive index of the high-refractive-index layer. Specifically, by forming the high-refractive-index layer by using the high-refractive-index member, the difference between the refractive index of the high-refractive-index layer and the refractive index of the base material layer can be increased, thereby more increasing the reflectivity of the anti-reflection film.

Examples of the high-refractive-index member include titanium oxide, zirconium oxide ($ZrO_2$), zinc oxide, alu-

mina, colloidal alumina, lead titanate, red lead, chrome yellow, zinc yellow, chrome oxide, ferric oxide, iron black, copper oxide, magnesium oxide, magnesium hydroxide, strontium titanate, yttrium oxide, hafnium oxide, niobium oxide, tantalum oxide ($Ta_2O_5$), barium oxide, indium oxide, europium oxide, lanthanum oxide, zircon, tin oxide and lead oxide, and double oxides thereof such as lithium niobate, potassium niobate, lithium tantalate and aluminum magnesium oxide ($MgAl_2O_4$).

Further, as the high-refractive-index member, a rare earth oxide can be used, and for example, scandium oxide, yttrium oxide, lanthanum oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, lutetium oxide, etc. can be used.

Among the above-described many options, as the high-refractive-index member, zirconia (zirconium oxide) is preferred.

The high-refractive-index member is preferably a particulate member. The particle size (diameter: average particle size) of the particulate high-refractive-index member is not particularly limited, but it is, for example, 1 to 100 nm, preferably 5 to 50 nm, more preferably 7.5 to 30 nm, and particularly preferably 10 to 20 nm.

The (average) particle size of the particulate high-refractive-index member is measured by, for example, the dynamic light scattering method in accordance with JIS Z 8828:2019 (ISO 22412:2017), as described hereinabove.

Further, for example, the particulate high-refractive-index member preferably includes an organic layer coating serving as a surface treatment layer for covering the outer surface of a metal oxide or the like. By the organic layer coating, the compatibility of the high-refractive-index member with respect to the resin material forming the high-refractive-index layer is improved, and the high-refractive-index member can be firmly bonded to the resin material.

As the surface treatment layer, for example, an organic layer coating in which an ultraviolet reactive (cured) type functional group is introduced into the surface thereof is preferred.

The high-refractive-index layer includes the above-described resin material and the high-refractive-index member at a weight ratio of preferably 10:90 to 40:60, more preferably 15:85 to 35:65, and even more preferably 20:80 to 30:70.

<Refractive index of high-refractive-index layer>

The value of the refractive index of the high-refractive-index layer is higher than the value of the refractive index of the base material layer, and the refractive index of the high-refractive-index layer is preferably 1.68 to 1.75, more preferably 1.69 to 1.74, and even more preferably about 1.70 to 1.73.

Further, the difference between the refractive index of the high-refractive-index layer and the refractive index of the base material layer is preferably at least 0.09, more preferably at least 0.12, even more preferably at least 0.15, and particularly preferably at least 0.17. Further, the range of the difference between the refractive index of the high-refractive-index layer and the refractive index of the base material layer is, for example, 0.03 to 0.70, preferably 0.10 to 0.50, and more preferably 0.15 to 0.26. By increasing the difference between the value of the refractive index of the high-refractive-index layer and the value of the refractive index of the base material layer as described above, the reflectivity of the surface at the high-refractive-index layer side of the anti-reflection film can be increased.

<Other components>

The high-refractive-index layer or the resin material for forming the high-refractive-index layer preferably includes at least one of a photoinitiator (initiator for photopolymerization) and a leveling agent, and particularly preferably includes a photoinitiator. In addition, the resin material may include a solvent. Examples of the leveling agent include a fluorine-based leveling agent, an acrylic leveling agent and a silicone-based leveling agent.

<Thickness and position of high-refractive-index layer>

The thickness of the high-refractive-index layer is not particularly limited, but is preferably 10 to 300 nm, more preferably 50 to 250 nm, even more preferably 100 to 200 nm, and particularly preferably 130 to 170 nm.

The high-refractive-index layer is preferably arranged between the base material layer and the low-refractive-index layer, which will be described later in detail. In an anti-reflection film having such a layered structure, the reflectivity of the film as a whole can be surely reduced.

[Additional layer (layer other than base material layer or anti-reflection layer: other layer)]

In the anti-reflection film, a layer (additional layer) other than the base material layer or the anti-reflection layer (the low-refractive-index layer or the high-refractive-index layer) may be layered. For example, the other layer may be provided between the base material layer and the high-refractive-index layer, between the base material layer and the low-refractive-index layer, or between the low-refractive-index layer and the high-refractive-index layer, in the anti-reflection film.

The thickness of the other layer (additional layer) is not particularly limited, but is preferably 0.1 to 10 μm, and more preferably 0.5 to 5 μm.

The anti-reflection film may further have a hard coat layer as the other layer (additional layer) described above. The surface hardness of the anti-reflection film is increased by providing the hard coat layer.

The hard coat layer is preferably arranged between the base material layer and the low-refractive-index layer, or the between the base material layer and the high-refractive-index layer.

Further, in the anti-reflection film having a layered structure including the low-refractive-index layer, the high-refractive-index layer and the hard coat layer, the hard coat layer is preferably arranged between the base material layer and the high-refractive-index layer. That is, in the anti-reflection film that is a layered body further including the low-refractive-index layer and the hard coat layer in addition to the base material layer and the high-refractive-index layer, it is preferred that the base material layer, the hard coat layer, the high-refractive-index layer and the low-refractive-index layer should be arranged in this order.

The anti-reflection film having such a layered structure realizes high anti-reflection effects and improves the surface hardness, i.e., the hardness of the surface on the opposite side of the base material layer.

The hard coat layer is preferably formed by a hard coat treatment that is provided on the surface of the base material layer or the like. Specifically, it is preferred that a hard coat material that can be thermally cured or cured by active energy ray is applied and then cured, thereby layering the hard coat layer.

Examples of coating materials that are cured by active energy ray include a resin composition consisting of a monofunctional or polyfunctional acrylate monomer or oligomer alone or a plurality of such materials, and more preferred examples thereof include a resin composition including a urethane acrylate oligomer. A photopolymerization initiator as a curing catalyst is preferably added to these resin compositions.

Further, examples of thermosetting resin coating materials include a polyorganosiloxane-based material and a crosslinked acrylic material. Some of such resin compositions are commercially available as hard coat agents for acrylic resins or polycarbonate resins, and such materials may be suitably selected in consideration of suitability for a coating line.

To these coating materials, an organic solvent, various stabilizers such as an ultraviolet absorber, a light stabilizer and an antioxidant, surfactants such as a leveling agent, a defoaming agent, a thickening agent, an antistatic agent and an antifog additive, etc. may be suitably added according to need.

Examples of hard coat coating materials which are cured by active energy ray include a product obtained by adding 1 to 10 parts by weight of a photopolymerization initiator to 100 parts by weight of a photopolymerizable resin composition that is obtained by mixing about 40 to 95% by weight of a hexafunctional urethane acrylate oligomer and about 5 to 60% by weight of a (meth)acrylate such as 2-(2-vinyloxyethoxy)ethyl (meth)acrylate [2-(2-vinyloxyethoxy)ethyl acrylate: VEEA].

Further, as the above-described photopolymerization initiator, generally known materials can be used. Specific examples thereof include benzoin, benzophenone, benzoin ethyl ether, benzoin isopropyl ether, 2,2-dimethoxy-2-phenylacetophenone, 1-hydroxycyclohexyl phenyl ketone, 2-hydroxy-2-methyl-1-phenylpropane-1-one, azobisisobutyronitrile and benzoyl peroxide.

It is preferred that the value of the refractive index of the hard coat layer is equal or almost equal to (a value in the same range as for) the refractive index of the base material layer. Specifically, the hard coat layer preferably has a refractive index of 1.49 to 1.65. The refractive index of the hard coat layer is more preferably 1.49 to 1.60, even more preferably 1.51 to 1.60, and particularly preferably about 1.53 to 1.59.

Further, the difference between the refractive index of the base material layer and the refractive index of the hard coat layer is preferably 0.04 or less, more preferably 0.03 or less, and even more preferably 0.02 or less.

The thickness of the hard coat layer is not particularly limited, but it is preferably 1 to 10 μm, more preferably 2 to 8 μm, and even more preferably about 3 to 7 μm.

[Characteristics of anti-reflection film]

<Refractive index>

The refractive index of each of the resin materials of Examples and Comparative Examples described below was measured for the light having a wavelength of 589 nm using a spectroscopic ellipsometer Auto SE (manufactured by HORIBA, Ltd.), which is an automatic analyzer for thin film.

<Reflectivity>

The value of the reflectivity on the outer surface of the anti-reflection film, i.e., the reflectivity on the surface of

the low-refractive-index layer opposite from the base material layer side is preferably 2.0% or less, more preferably 1.8% or less, and even more preferably 1.5% or less, as measured under conditions of JIS Z 8722 2009.

<Pencil hardness>

The surface of the anti-reflection layer side of the anti-reflection film preferably has high hardness. Specifically, on the surface of the low-refractive-index layer side opposite from the base material layer, for example, the pencil hardness defined by JIS K-5400 is preferably 3B or harder, more preferably 2B or harder, even more preferably F or harder, and particularly preferably 2H or harder.

<Abrasion resistance>

The surface of the low-refractive-index layer side of the anti-reflection film preferably has excellent abrasion resistance. Specifically, it is preferred that when a medical nonwoven fabric RP cross gauze No. 4 (manufactured by Osaki Medical Corporation) is shuttled 10 times on the surface of the low-refractive-index layer side of each film in the Examples while applying a load of 250 g/cm$^2$ to the nonwoven fabric, no scratch which can be visually recognized is generated.

<Thermoformability (molding processability including deep drawability and right angle shape-imparting characteristics)>

When a pressure formed body in which the value of the radius R is sufficiently small is obtained, it means that the anti-reflection film is easily formed in a manner such that it is formed along a right angle area of a mold and has excellent deep drawability and right angle shape-imparting characteristics.

<Conditions of film surface>

Regarding the anti-reflection film, it is preferred that conditions of the surfaces, in particular, the surface of the low-refractive-index layer side are good. Specifically, it is preferred that even after the process of applying, drying and curing the resin material for forming the low-refractive-index layer, none of crack, whitening, foaming and unevenness (mainly color unevenness) is observed on the surface of the anti-reflection film and that it can be said that the surface of the obtained anti-reflection film has good outer appearance.

<Elongation rate>

The anti-reflection film is also excellent in the elongation rate at the time of forming. Specifically, as in the case of evaluation of thermoformability, when the polycarbonate resin side of the sample obtained by cutting into a size of 210 mm×297 mm×0.3 mm (thickness) is preheated at 190°C for 40 seconds, the sample is placed in a mold having a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, in an area in which a pressure formed body obtained is in contact with the right angle-shaped projection of the mold, the value of the elongation rate calculated as described below is preferably high.
Specifically, on the surface of the sample of the anti-reflection film, grid-like lines at predetermined intervals (e.g., 1 mm) are printed, and the value of the elongation rate is calculated according to formula (A) below, which is based on how large the interval between the predetermined grid-like lines after pressure forming is as compared to the interval prior to pressure forming.

$$\text{pressure forming (mm)} \times 100\ (\%)\ \ldots\ \text{formula (A)}$$

It can be said that the above-described formula (A) is equivalent to the following formula: (Length between predetermined two points after pressure forming - Length between the predetermined two points before pressure forming) / Length between the predetermined two points before pressure forming ×100 (%)
Using the above-described formula (A), the elongation rate (%) of an area after the anti-reflection film prior to pressure forming is placed in a manner such that it covers the right angle-shaped portion having a deep drawing height of 1 mm or more and pressure forming is performed can be calculated. As exemplified in Figure 3, when grid-like lines at 1 mm intervals are printed on the surface of the anti-reflection film prior to pressure forming and an interval between grid-like lines in a predetermined area after pressure forming, for example, in an area surrounded by a rhomboidal shape in Figure 3, is 2 mm, based on the above-described formula (A), the elongation rate is calculated as follows: (2 (mm)-1

(mm))/1 (mm)×100=100 (%)

It is preferred that the anti-reflection film can be formed in a manner such that the value of the elongation rate calculated based on the above-described formula (A) becomes sufficiently high.

For example, regarding a sample of the anti-reflection film obtained by being cut into a size of 210 mm×297 mm×0.3 mm (thickness), when the base material layer is preheated at 190°C for 40 seconds, the sample is placed in a mold having a right angle-shaped projection having a deep drawing height of 1 mm to 5 mm and a size of 30 mm×30 mm in a manner such that the base material layer is in contact with the mold, and the sample is subjected to pressure forming using high pressure air of 1.5 MPa, in an area in which a pressure formed body obtained is in contact with the right angle-shaped portion of the mold, the value of the elongation rate (%) that is calculated based on formula (A) is preferably equal to or more than a value of the deep drawing height (mm) of the mold × 10, and more preferably equal to or more than a value of the deep drawing height (mm) of the mold × 14.

More specifically, when using the anti-reflection film in the Examples, after it is placed in a manner such that it covers the right angle-shaped portion of the mold having a deep drawing height of 1 mm and pressure forming is performed, the elongation rate of 10 (%) or more, or 14 (%) or more can be realized. Further, when the anti-reflection film in the Examples is placed in a manner such that it covers the right angle-shaped portion (projection) of the mold having a deep drawing height of 3 mm and pressure forming is performed, the elongation rate of 30 (%) or more, or 42 (%) or more can be realized. Similarly, when the deep drawing height of the right angle-shaped portion of the mold is 7 mm, the elongation rate of at least 70%, or about 100% (98%) can be achieved.

[Layered product, layered product film]

The layered product, e.g., the layered product film, of the present invention has an anti-reflection film, and preferably has the above-described anti-reflection film and a transparent resin base material. As the transparent resin base material, for example, a product obtained by layering a methacrylic resin layer on a layer of a polycarbonate of bisphenol A, a product obtained by layering a layer of a polycarbonate of bisphenol C on a layer of a polycarbonate of bisphenol A or the like is used. The thickness of the transparent resin base material is not particularly limited, but it is preferably 30 μm to 1000 μm (1 mm), more preferably 50 μm to 700 μm, and even more preferably 100 μm to 500 μm.

The above-described layered product can be used for various applications as described below. Examples of the layered product film include films to be laminated on surfaces of a computer, particularly a computer screen, a television, particularly a television screen, a plasma display panel, etc., and films to be used for surfaces of a polarizing plate to be used for a liquid crystal display, a sunglass lens, a prescription glass lens, a finder lens for a camera, a cover for various instruments, glass of automobiles, glass of trains, a display panel for a vehicle, an electronic equipment casing, etc.

[Method for producing anti-reflection film and layered product film]

In the production of the anti-reflection film, firstly, the base material layer is preferably formed. In the production of the base material layer, a material such as a resin composition is processed to form a layer shape (sheet shape) using a conventional technique. Examples thereof include methods using extrusion molding or cast molding. For example, in a method using extrusion molding, the resin composition of the present invention in the form of pellet, flake or powder is melted and kneaded by an extruder and then extruded from a T-die or the like, and a sheet in a semi-melted state obtained is cooled and solidified while being compressed by rolls, thereby forming a sheet.

Further, the resin material described above is applied to the outer surface(s) of one or more base material layers and cured to thereby form a low-refractive-index layer. In this manner, the anti-reflection layer can be formed by the step of layering the low-refractive-index layer having a refractive index lower than that of the base material layer on at least one surface of the base material layer including a thermoplastic resin. The high-refractive-index layer can also be formed in the same manner as in the layering step for the low-refractive-index layer by using a resin material for the high-refractive-index layer.

As a technique of curing the resin material, photocuring, thermal curing or the like can be employed.

On the anti-reflection film thus produced, a transparent resin base material can be arranged by, for example, a known method to thereby produce a layered product film.

EXAMPLES

Hereinafter, the present invention will be described in more detail by way of examples. However, the present invention is not limited to the below-described examples, and can be arbitrarily changed and then carried out without departing from the gist of the present invention.

<Base material layer>

A transparent resin sheet (DF02U, manufactured by MITSUBISHI GAS CHEMICAL COMPANY, INC.; total thickness 300 μm) composed of a polycarbonate resin layer made of 2,2-bis(4-hydroxyphenyl)propane (bisphenol A) (refractive index 1.584) and a methacrylic resin layer (refractive index 1.491) arranged thereon was used as a base material layer.

<Low-refractive-index coating>

Methyl ethyl ketone as a solvent was added to each of resin materials of urethane (meth)acrylate, (U-1) to (U-8), as a reaction product obtained by reacting the compounds as described below, to thereby prepare a mixed liquid (urethane acrylate liquid (resin content 80 mass%: solvent (methyl ethyl ketone) 20 mass%).

1. Urethane acrylate liquids of Examples 1 to 6

(U-1)

- Polymer of meta-xylene diisocyanate and pentaerythritol triacrylate (refractive index 1.508)

(U-2)

- Polymer of meta-xylene diisocyanate, pentaerythritol triacrylate and caprolactone acrylate

(U-2-1)
Pentaerythritol triacrylate/caprolactone acrylate = 50/50, in terms of mole (refractive index 1.489)
(U-2-2)
Pentaerythritol triacrylate/caprolactone acrylate = 20/80, in terms of mole (refractive index 1.497)
(U-2-3)
Pentaerythritol triacrylate/caprolactone acrylate = 80/20, in terms of mole (refractive index 1.503)
(U-3)

- Polymer of meta-xylene diisocyanate, pentaerythritol triacrylate and 2-hydroxyethyl acrylate (refractive index 1.508)

Pentaerythritol triacrylate/2-hydroxyethyl acrylate = 50/50, in terms of mole
(U-4)

- Polymer of meta-xylene diisocyanate, pentaerythritol triacrylate and 2-hydroxybutyl acrylate (refractive index is 1.507)

Pentaerythritol triacrylate/2-hydroxybutyl acrylate = 50/50, in terms of mole

2. Urethane acrylate liquids of Comparative Examples 1 to 4

(U-5)

- Polymer of isophorone diisocyanate and pentaerythritol triacrylate (refractive index 1.495)

(U-6)

- Polymer of isophorone diisocyanate, pentaerythritol triacrylate and caprolactone acrylate (refractive index 1.489)

Pentaerythritol triacrylate/caprolactone acrylate = 50/50, in terms of mole
(U-7)

- Polymer of isophorone diisocyanate, pentaerythritol triacrylate and 2-hydroxyethyl acrylate (refractive index 1.496)

Pentaerythritol triacrylate/2-hydroxyethyl acrylate = 50/50, in terms of mole
(U-8)

- Polymer of isophorone diisocyanate, pentaerythritol triacrylate and 2-hydroxybutyl acrylate (refractive index 1.494)

Pentaerythritol triacrylate/2-hydroxybutyl acrylate = 50/50, in terms of mole

2-(2-Vinyloxyethoxy)ethyl acrylate (VEEA) was added to each of the urethane acrylate liquids (U-1) to (U-8) described above in a ratio of urethane acrylate liquid/VEEA = 90/10 (wt%), followed by mixing.

Furthermore, the mixed resin and a hollow silica described above (THRULYA 4320, manufactured by JGC C&C: average particle size 50 to 60 nm) were mixed in a ratio of 50/50 (wt%). To the resulting mixed liquid, 5 wt% of 1-hydroxy-cyclohexylphenyl-ketone (Omnirad 184, manufactured by IGM Resins B.V) as a photo initiator and 1 wt% of a leveling agent RS-78 (manufactured by DIC: solids content of the leveling agent 40 wt%; diluted product with a solvent MEK) were added and dissolved, and a solvent (propylene glycol monomethyl ether) was added thereto to adjust the concentration such that the solids content was 1.5 wt%. The resultant was used as a low-refractive-index coating for a low-refractive-index layer.

<Hard coat coating>

(HC-1): Hard coat resin consisting of isophorone diisocyanate (771 parts by weight), 2-acryloylethyl-2-hydroxyethylphthalic acid (987 parts by weight) and caprolactone acrylate (1102 parts by weight) (molar ratio of 2-acryloylethyl-2-hydroxyethylphthalic acid: caprolactone acrylate = 50:50)
(HC-2): Hard coat resin consisting of xylene diisocyanate (1175 parts by weight) and 2-hydroxypropyl acrylate (1625 parts by weight)

HC-1 and HC-2 were mixed in a weight ratio of 80:20, and 5 wt% of 1-hydroxy-cyclohexyl-phenyl-ketone (Omnirad 184, manufactured by IGM Resins B.V) as a photo initiator was added thereto. A solvent (propylene glycol monomethyl ether) was added thereto to adjust the concentration such that the solids content was 30 wt% (HC-3).

The above-described values in parts by weight are each the amount loaded.

<Procedure>

On the methacrylic resin layer of the above-described base material layer, the hard coat coating (HC-3) was applied such that the thickness of a dry coating film was 3 μm, followed by drying at 100°C for 1 minute. Furthermore, the resultant was irradiated with ultraviolet ray using a UV curing device such that the cumulative radiation was 250 mJ/cm$^2$, thereby forming a hard coat layer (refractive index value 1.51).

Then, on the hard coat layer, the low-refractive-index coating was applied such that the thickness of a dry coating film was 100 μm, followed by drying at 100°C for 1 minute. Furthermore, the resultant was irradiated with ultraviolet ray in an environment purged with nitrogen using a UV curing device such that the cumulative radiation was 250mJ/cm$^2$, thereby forming a low-refractive-index layer.

Characteristics of anti-reflection film

Adhesion:

On a cured film, 11 cuts at 1 mm intervals were made vertically and horizontally respectively by a cutter to provide 100 squares, and Sellotape (registered trademark) (adhesive tape manufactured by NICHIBAN Co., Ltd.) was attached on the squares and then peeled off at once in the direction of 90°. The number of squares where the cured film was not removed (remained) was counted.

Further, the condition where the coated film remained in all the squares was evaluated as "good", and the condition where the coated film was removed at least slightly was evaluated as "poor".

Abrasion resistance:

A medical nonwoven fabric RP cross gauze No. 4 (manufactured by Osaki Medical Corporation) was shuttled 1000 times on the surface of the low-refractive-index layer side of each film in the Examples while applying a load of 500 g/$cm^2$ to the nonwoven fabric, and the condition regarding scratch was visually judged.

Reflectivity (luminous reflectance):

The measurement was carried out in accordance with JIS Z 8722-009 using SD6000 manufactured by Nippon Denshoku Industries Co., Ltd. In the measurement, a black vinyl tape was applied on the surface opposite to the coated surface in order to prevent reflection from the back surface (base material layer side) of each film in the Examples.

Each anti-reflection film obtained in the Examples was cut into a size of 210 mm×297 mm×0.3 mm (thickness), and the polycarbonate resin side of the obtained sample was preheated at 190°C for about 40 seconds. Immediately after that, with high pressure air of 1.5 MPa, pressure forming was carried out using a mold having a right angle-shaped projection with a deep drawing height. Note that the deep drawing height in the right angle-shaped mold was set to 1 mm, 2 mm and 5 mm or more (1 mm intervals). Further, the value of the radius R of an area in which a pressure formed body that was obtained by pressure forming using a mold having a right angle-shaped projection having a deep drawing height of 1 mm or more and a size of 30 mm×30 mm was in contact with the right angle-shaped portion of the mold was measured, and it was described as "right angle shape radius R (mm)" in Table 1 below. It can be said that the smaller the value is, the more excellent the formability is.

The radius R of the right angle-shaped portion was measured using a contact-type contour shape measurement apparatus CONTOURECORD2700/503 (manufactured by Tokyo Seimitsu Co., Ltd.).

In addition, surface conditions (crack, whitening, foaming and unevenness) of the formed body obtained were observed, and when none of crack, whitening, foaming and unevenness was observed, the abrasion resistance was evaluated as "no scratch". Further, the case where a formed body having a deep drawing height of 1 mm or more and a radius R of the right angle-shaped portion of 3.0 mm or less was successfully formed without scratch was comprehensively evaluated as "good" thermoformability. The deep drawing height of the formed body obtained by thermoforming, that is, the height from the base plane of the film as the formed body to the area formed in the convex portion (projection) of the mold was actually measured as a value of the "deep drawing height (mm)".

The measurement results regarding the characteristics of the films of Examples and Comparative Examples were as described in Table 1. The refractive index in the table is a value of each coating for the layer prior to polymerization, and in all the layers, the value of the refractive index after polymerization was larger, by about 0.02, than the value of the coating prior to polymerization.

[Table 1]

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Layered product | Low-refractive-index layer/resin (Refractive index) | U-1 (1.4040) | U-2-1 (1.3945) | U-2-2 (1.3985) | U-2-3 (1.4015) | U-3 (1.4040) | U-4 (1.4035) | U-5 (1.3975) | U-6 (1.3945) | U-7 (1.3980) | U-8 (1.3970) |
| | Base material layer (Refractive index) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) | PC resin layer/methacryl resin layer (1.584/1.491) |
| Evaluation items | Adhesion | 100/100 | 100/100 | 100/100 | 100/100 | 100/100 | 100/100 | 100/100 | 0/100 | 100/100 | 48/100 |
| | Abrasion resistance | No scratch | No scratch | No scratch | No scratch | No scratch | No scratch | Scratch was present | Scratch was present | Scratch was present | Scratch was present |
| | Deep drawing height (mm) | 2 | 2 | 3 | 2 | 2 | 2 | Crack was generated | 2 | 2 | 2 |
| | Luminous reflectance (%) | 1.5 | 1.4 | 1.4 | 1.4 | 1.4 | 1.4 | 1.4 | 1.4 | 1.4 | 1.4 |

The refractive index in the table is a value of each layer including the low-refractive-index member (hollow silica) prior to curing.

Thus, it was confirmed that the anti-reflection films in the Examples have not only high adhesion between layers, satisfactory abrasion resistance and high surface hardness, but also excellent thermoformability and low surface reflectivity.

Further, even when an additional layer (other layer) 18, such as a hard coat layer, is formed unlike Examples 1-6, an anti-reflection film 10B having excellent characteristics can be obtained (see Figure 2).

REFERENCE SIGNS LIST

| | |
|---|---|
| 10A, 10B | anti-reflection film |
| 12 | low-refractive-index layer |
| 16 | high-refractive-index layer |
| 18 | additional layer (other layer) |
| 20 | methacrylic resin layer (base material layer) |
| 22 | polycarbonate resin layer (base material layer) |

## Claims

**1.** An anti-reflection film comprising:

a base material layer including a thermoplastic resin; and
a low-refractive-index layer that is arranged on at least one surface of the base material layer and that has a refractive index lower than the refractive index of the base material layer, wherein
the low-refractive-index layer includes a polymer of a resin material including:

a urethane (meth)acrylate derived from

(a1) an aromatic diisocyanate compound and
(a2) one or more (meth)acryloyl compounds having a hydroxyl group and a (meth)acryloyl group per molecule, and

a (meth)acrylate.

**2.** The anti-reflection film according to claim 1, wherein the resin material comprises a mixture of urethane (meth)acrylates each having two to six (meth)acryloyl groups per molecule.

**3.** The anti-reflection film according to claim 1, wherein the urethane (meth)acrylate includes a reaction product of

the aromatic diisocyanate compound (a1), and
the (meth)acryloyl compound (a2), wherein the (meth)acryloyl compound is any one or more selected from the group consisting of pentaerythritol tri(meth)acrylate, 2-hydroxyethyl (meth)acrylate, 2-hydroxypropyl (meth)acrylate, 2-hydroxybutyl (meth)acrylate, 4-hydroxybutyl (meth)acrylate, caprolactone (meth)acrylate, and 2-hydroxy-3-phenoxypropyl (meth)acrylate.

**4.** The anti-reflection film according to claim 1, wherein the (meth)acryloyl compound (a2) includes

(a2-1) a compound having one (meth)acryloyl group per molecule, and
(a2-2) a compound having three (meth)acryloyl groups per molecule, in a molar ratio (a2-1)/(a2-2) of 80/20 to 0/100.

**5.** The anti-reflection film according to claim 1, wherein the (meth)acryloyl compound (a2) includes at least one selected from pentaerythritol tri(meth)acrylate, 2-hydroxyethyl (meth)acrylate, 2-hydroxypropyl (meth)acrylate, 2-hydroxybutyl (meth)acrylate, 4-hydroxybutyl (meth)acrylate, caprolactone (meth)acrylate, and 2-hydroxy-3-phenoxypropyl (meth)acrylate.

6. The anti-reflection film according to claim 1, wherein the (meth)acrylate is a compound having at least one (meth)acryloyl group and at least one vinyl ether group, having 4 to 20 carbon atoms, and optionally having a substituent group.

7. The anti-reflection film according to claim 1, wherein the low-refractive-index layer further includes a low-refractive-index member.

8. The anti-reflection film according to claim 7, wherein the low-refractive-index member includes a hollow silica.

9. The anti-reflection film according to claim 7 or 8, wherein the low-refractive-index layer includes the resin material and the low-refractive-index member in a weight ratio of 20:80 to 70:30.

10. The anti-reflection film according to claim 1, wherein the low-refractive-index layer further includes at least one of a photoinitiator and a fluorine-based leveling agent.

11. The anti-reflection film according to claim 1, wherein the resin material includes the urethane acrylate and the (meth)acrylate in a weight ratio of 95:5 to 70:30.

12. The anti-reflection film according to claim 1, which includes two or more of the base material layers.

13. The anti-reflection film according to claim 1, wherein the base material layer has a thickness of 50 to 500 μm and the low-refractive-index layer has a thickness of 10 to 200 nm.

14. The anti-reflection film according to claim 1, which further has a hard coat layer that is arranged between the base material layer and the low-refractive-index layer.

15. The anti-reflection film according to claim 14, wherein the base material layer has a refractive index of 1.49 to 1.65, and wherein the difference between the refractive index of the base material layer and the refractive index of the hard coat layer is 0.04 or less.

16. The anti-reflection film according to claim 1, which further has a high-refractive-index layer that has a refractive index higher than the refractive index of the base material layer.

17. The anti-reflection film according to claim 16, wherein the base material layer has a refractive index of 1.49 to 1.65, the low-refractive-index layer has a refractive index of 1.31 to 1.40, and the high-refractive-index layer has a refractive index of 1.68 to 1.75.

18. The anti-reflection film according to claim 16, wherein the high-refractive-index layer is arranged between the base material layer and the low-refractive-index layer.

19. The anti-reflection film according to claim 16, which further has a hard coat layer that is arranged between the base material layer and the high-refractive-index layer.

20. The anti-reflection film according to claim 16, which further has a hard coat layer, wherein:
the base material layer has a thickness of 50 to 500 μm; the hard coat layer has a thickness of 1 to 10 μm; the high-refractive-index layer has a thickness of 10 to 200 nm; and the low-refractive-index layer has a thickness of 10 to 200 nm.

21. The anti-reflection film according to claim 16, wherein the high-refractive-index layer includes a polymer of a resin material including: a urethane (meth)acrylate derived from a fluorene-based diols, an isocyanate, and a (meth)acrylate; and a (meth)acrylate.

22. The anti-reflection film according to any one of claims 1 to 21, wherein regarding a sample of the anti-reflection film obtained by being cut into a size of 210 mm×297 mm×0.3 mm (thickness), when the base material layer is preheated at 190°C for 40 seconds, the sample is placed in a mold including a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, the radius R of an area in which a pressure formed body obtained is in contact with the right angle-shaped portion of the mold is 3.0 mm or less.

**23.** An anti-reflection film comprising:

a base material layer including a thermoplastic resin; and
a low-refractive-index layer that is arranged on at least one surface of the base material layer and that has a refractive index lower than the refractive index of the base material layer, wherein
regarding a sample of the anti-reflection film obtained by being cut into a size of 210 mm×297 mm×0.3 mm (thickness), when the base material layer is preheated at 190°C for 40 seconds, the sample is placed in a mold including a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, in an area in which a pressure formed body obtained is in contact with the right angle-shaped portion of the mold, an elongation rate (%) that is a value obtained by formula:

(Length between predetermined two points after pressure forming - Length between the predetermined two points before pressure forming) / Length between the predetermined two points before pressure forming × 100 (%)

is equal to or more than a value of the deep drawing height (mm) of the mold × 10.

**24.** An anti-reflection film comprising:

a base material layer including a thermoplastic resin; and
a low-refractive-index layer that is arranged on at least one surface of the base material layer and that has a refractive index lower than the refractive index of the base material layer, wherein
a value of the reflectivity on the surface of the low-refractive-index layer side measured under conditions of JIS Z 8722-2009 is 2.0% or less, and wherein
regarding a sample of the anti-reflection film obtained by being cut into a size of 210 mm×297 mm×0.3 mm (thickness), when the base material layer is preheated at 190°C for 40 seconds, the sample is placed in a mold including a right angle-shaped projection having a deep drawing height of 1 mm or more and a size of 30 mm×30 mm in a manner such that the base material layer is in contact with the mold, and the sample is subjected to pressure forming using high pressure air of 1.5 MPa, the radius R of an area in which a pressure formed body obtained is in contact with the right angle-shaped portion of the mold is 3.0 mm or less.

**25.** A layered product having a transparent resin base material and the anti-reflection film according to any one of claims 1 to 24.

**26.** A method for producing an anti-reflection film, comprising:

layering, on at least one surface of a base material layer including a thermoplastic resin, a low-refractive-index layer that has a refractive index lower than the refractive index of the base material layer, wherein
the low-refractive-index layer includes a polymer of a resin material including:

a urethane (meth)acrylate derived from

(a1) an aromatic diisocyanate compound and
(a2) one or more (meth)acryloyl compounds having a hydroxyl group and a (meth)acryloyl group per molecule, and

a (meth)acrylate.

[Figure 1]

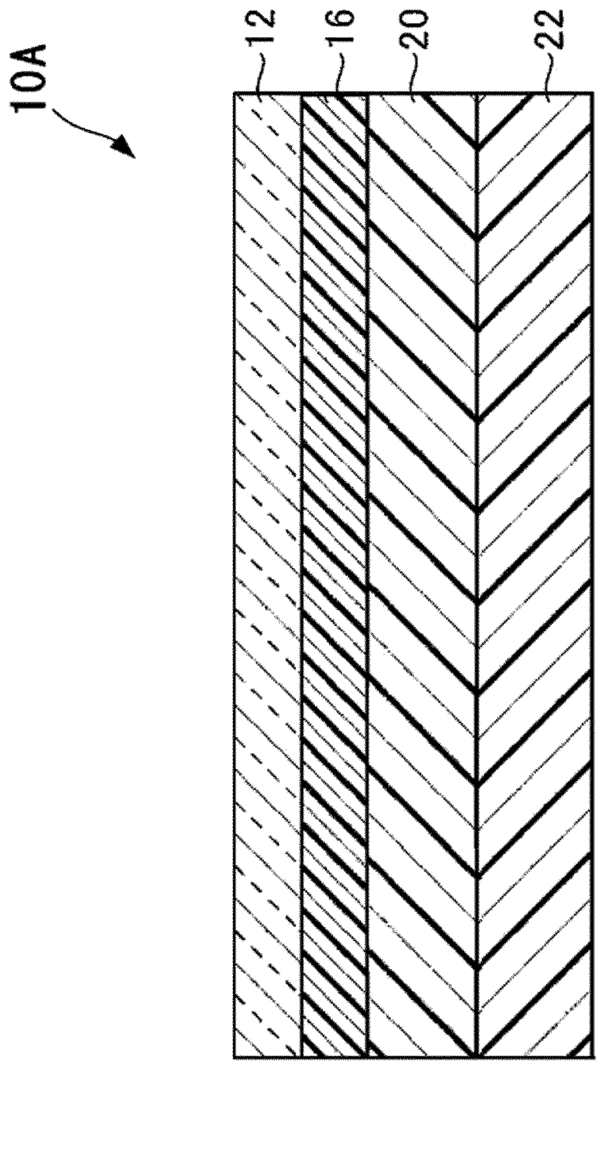

[Figure 2]

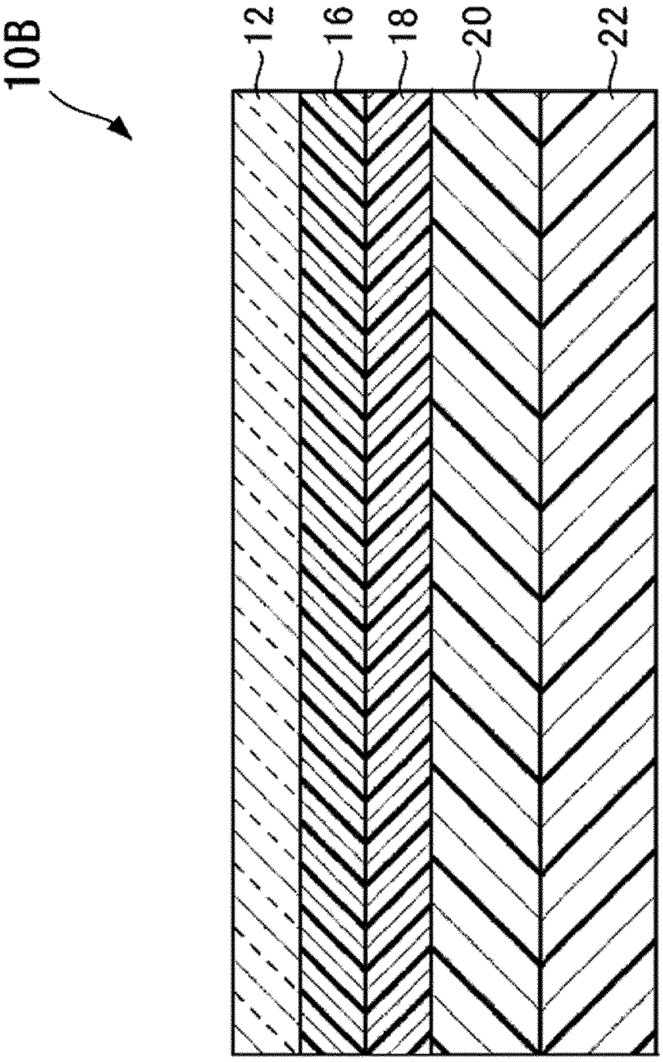

[Figure 3]

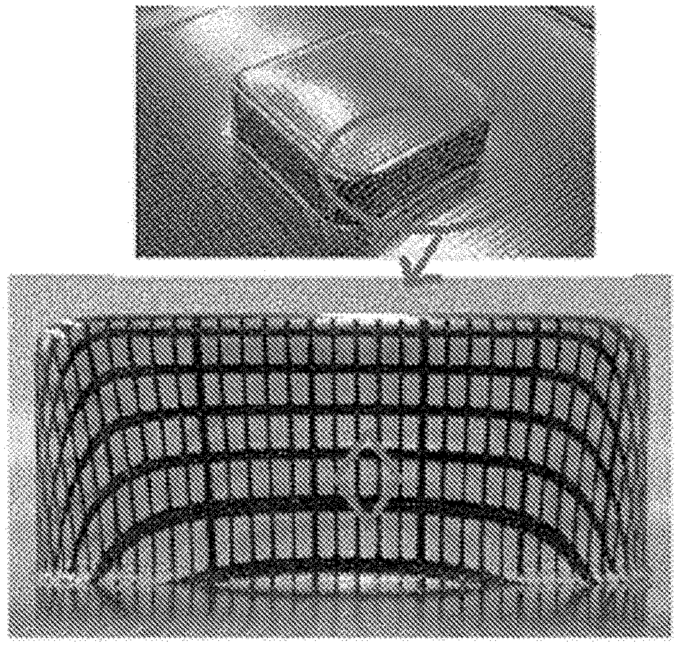

## INTERNATIONAL SEARCH REPORT

International application No.
**PCT/JP2022/022066**

**A. CLASSIFICATION OF SUBJECT MATTER**

***B32B 7/023***(2019.01)i; ***B32B 27/30***(2006.01)i; *C08F 290/06*(2006.01)n
FI: B32B7/023; B32B27/30 A; C08F290/06

According to International Patent Classification (IPC) or to both national classification and IPC

**B. FIELDS SEARCHED**

Minimum documentation searched (classification system followed by classification symbols)

B32B1/00-43/00; G02B1/111; C09D175/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/145286 A1 (MITSUBISHI GAS CHEMICAL CO., INC.) 16 July 2020 (2020-07-16)<br>claims, paragraphs [0020], [0021], [0051]-[0064] | 1-26 |
| A | JP 2006-138879 A (DAINIPPON PRINTING CO., LTD.) 01 June 2006 (2006-06-01)<br>claims, paragraphs [0015], [0023], [0026], [0027], [0093]-[0097] | 1-26 |
| A | WO 2020/189707 A1 (MITSUBISHI GAS CHEMICAL CO., INC.) 24 September 2020 (2020-09-24)<br>claims, paragraphs [0019]-[0035] | 1-26 |
| A | JP 11-343460 A (MITSUBISHI GAS CHEMICAL CO., INC.) 14 December 1999 (1999-12-14)<br>claims, paragraph [0010] | 1-26 |
| A | JP 2018-529987 A (SAMSUNG ELECTRONICS CO., LTD.) 11 October 2018 (2018-10-11)<br>claims, paragraphs [0043], [0058], [0059] | 1-26 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 July 2022** | **26 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/022066

C. DOCUMENTS CONSIDERED TO BE RELEVANT

| Category* | Citation of document, with indication, where appropriate, of the relevant passages | Relevant to claim No. |
|---|---|---|
| P, A | WO 2022/025175 A1 (CHUGOKU MARINE PAINTS, LTD.) 03 February 2022 (2022-02-03)<br>claims, paragraphs [0013], [0014], [0018] | 1-26 |

Form PCT/ISA/210 (second sheet) (January 2015)

**INTERNATIONAL SEARCH REPORT**
**Information on patent family members**

International application No.
**PCT/JP2022/022066**

| Patent document cited in search report | Publication date (day/month/year) | Patent family member(s) | Publication date (day/month/year) |
|---|---|---|---|
| WO 2020/145286 A1 | 16 July 2020 | EP 3909744 A1<br>claims, paragraphs [0022]-[0024], [0073]-[0096]<br>CN 113302035 A<br>KR 10-2021-0111756 A | |
| JP 2006-138879 A | 01 June 2006 | (Family: none) | |
| WO 2020/189707 A1 | 24 September 2020 | CN 113574420 A<br>KR 10-2021-0142595 A | |
| JP 11-343460 A | 14 December 1999 | (Family: none) | |
| JP 2018-529987 A | 11 October 2018 | US 2018/0196169 A1<br>claims, paragraphs [0061]-[0076], [0077]<br>WO 2016/208785 A1<br>EP 3315545 A1<br>CN 107820503 A<br>KR 10-2018-0025866 A | |
| WO 2022/025175 A1 | 03 February 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014041244 A